(19) Europäisches Patentamt
European Patent Office
Office européen des brevets

(11) Veröffentlichungsnummer: **0 403 432 A2**

# (12) EUROPÄISCHE PATENTANMELDUNG

(21) Anmeldenummer: **90810411.0**

(51) Int. Cl.5: **C09D 5/36, B05D 7/14**

(22) Anmeldetag: **06.06.90**

(30) Priorität: **15.06.89 US 366900**

(43) Veröffentlichungstag der Anmeldung:
**19.12.90 Patentblatt 90/51**

(84) Benannte Vertragsstaaten:
**BE DE ES FR GB IT NL SE**

(71) Anmelder: **CIBA-GEIGY AG**
**Klybeckstrasse 141**
**CH-4002 Basel(CH)**

(72) Erfinder: **Pfenninger, Johannes, Dr.**
**2233 Inwood Road**
**Wilmington, Delaware 19810(US)**
Erfinder: **Jaffe, Edward E., Dr.**
**3 Crenshaw Drive**
**Wilmington, Delaware 19810(US)**

## (54) Perlglänzende Ueberzugszusammensetzungen.

(57) Ueberzugszusammensetzungen enthaltend ein Harz-Bindemittelsystem, beschichtete Glimmerpartikeln und ein Mangansalz eines Azopigmentes.

Solche Ueberzugszusammensetzungen eignen sich besonders gut für Zweischichtlacksysteme für Automobile. Die damit erzielten Lackierungen zeichnen sich durch ihre Farbstärke, hohen Perlglanz und hervorragende Allgemeinbeständigkeiten aus.

EP 0 403 432 A2

## Perlglänzende Ueberzugszusammensetzungen

Die vorliegende Erfindung betrifft perlglänzende Ueberzugszusammensetzungen enthaltend ein Harz-Bindemittelsystem, beschichtete Glimmerpartikeln und ein Mangansalz eines Azopigments. Solche Ueberzugszusammensetzungen eignen sich besonders gut für Zweischichtlacksysteme für Automobile, bei welchen die perglänzende Ueberzugszusammensetzung als Vorlegelack appliziert und mit einem klaren, ggf. Stabilisatoren (z.B. Antioxidantien und Lichtschutzmittel) enthaltenden Decklack überzogen wird. Solche Lacksysteme zeichnen sich durch ihre Farbstärke, hohen Perlglanz und hervorragende Allgemeinbeständigkeiten aus.

Zweischichtlacksysteme sind von immer grösserer technischer Bedeutung, insbesondere im Automobilsektor. Da oekologische Bestimmungen die Herabsetzung der Lösungsmittelemission in Automobilspritzanlagen fordern, erlangen die Lacksysteme mit hohem Feststoffgehalt stets zunehmende Bedeutung. Es ist in Fachkreisen wohl bekannt, dass die Anwesenheit von Pigmenten in der Deckschicht den Glanz und das ""DOI" (Distinctness of Image) von Lackierungen, insbesondere bei hohem Feststoffgehalt, unvorteilhaft beeinflussen. Dieser Nachteil kann weitgehend oder gänzlich vermieden werden, wenn der Vorlegelack pigmentiert wird und der klare Decklack für Glanz und "DOI" verantwortlich gemacht wird. Mit der Zweischichtlack-Technologie wird die Beständigkeit der Lackierung verbessert, da die pigmentierte Grundschicht durch die Stabilisatoren enthaltende klare Deckschicht von den Einflüssen der Atmosphäre und des Lichtes geschützt wird.

In Lackierungen werden Metall- oder Perlglanzeffekte durch Einarbeitung von plättchenförmigen Pigmenten im Grundlack erzeugt. Dabei entsteht ein geometrisches Metamerismus, welches Zweitoneffekt oder "Flip-Flop" genannt wird: Ein Effekt von grossem ästhetischem Wert.

Für diesen Zweck übliche plättchenförmige Pigmente sind z.B. Aluminiumplättchen oder mit Titandioxid oder Eisenoxid beschichtete Glimmerpartikeln. Beim Einsatz von Aluminium werden die Lackierungen etwas grau und stumpf. Darum wird Aluminium zunehmend durch Glimmer ersetzt. Mit beschichteten Glimmerplättchen erhält man leuchtendere und farbstärkere Lackierungen. Bei Einschichtlackierungen entstehen allerdings bezüglich Glanz sehr grosse Probleme wegen der stattlichen Partikelgrösse des Glimmers, die üblicherweise zwischen 5 und 50 $\mu m$ liegt. Bei Zweischichtlackierungen wird durch den Ueberzug mit dem klaren Decklack ein hervorragender Glanz, bei Erhaltung der Leuchtkraft, gewährleistet.

Es ist nun gefunden worden, dass die Kombination von Glimmer mit Mangansalzen von Azopigmenten in Harz-Bindemittelsystemen bei Verwendung in Zweischichtlacksystemen Lackierungen hoher Beständigkeit mit ganz besonders gutem Perlglanzeffekt ergibt.

Die vorliegende Erfindung betrifft demnach perlglänzende Ueberzugszusammensetzungen enthaltend ein Harz-Bindemittelsystem, beschichtete Glimmerpartikeln und ein Mangansalz eines Azopigmentes.

Beim Azopigment handelt es sich um jegliches übliche Azopigment, das in Form seines Mangansalzes erhältlich ist. Beispiele von solchen Pigmenten sind Azoverbindungen enthaltend zwei Carbonsäuregruppen, wie beispielsweise solche, die durch Kupplung von diazotierter Anthranilsäure oder von diazotierter substituierter Anthranilsäure mit einer unsubstituierten oder substituierten Amino- oder Hydroxynaphthoesäure erhältlich sind.

Bevorzugt sind die erfindungsgemässen Ueberzugszusammensetzungen, worin das Mangansalz eines Azopigments eine Verbindung der Formel

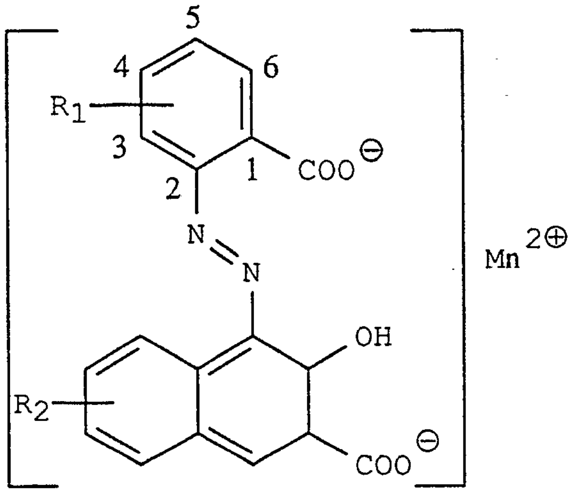

(I)

ist, worin $R_1$ und $R_2$, unabhängig voneinander, Wasserstoff, $C_1$-$C_4$-Alkyl, $C_1$-$C_4$-Alkoxy, Halogen, Nitro, Cyano, $C_1$-$C_4$-Alkoxycarbonyl, Carbamoyl oder Sulfamoyl bedeuten.

$C_1$-$C_4$-Alkyl ist z.B. Methyl, Ethyl, n-Propyl, Isopropyl, n-Butyl oder tert.-Butyl, vorzugsweise Methyl. $C_1$-$C_4$-Alkoxy ist z.B. Methoxy, Ethoxy, Propoxy. Bevorzugt ist Methoxy. Halogen ist beispielsweise Fluor, Brom, Jod und insbesondere Chlor. $C_1$-$C_4$-Alkoxy-carbonyl ist z.B. Ethoxycarbonyl und vorzugsweise Methoxycarbonyl.

$R_1$ kann in irgend einer Stellung des Benzolrings sein, z.B. in 3-, 4-, 5- oder 6-Stellung, befindet sich aber bevorzugt in der 4-Stellung, para zur Carboxy-Funktion.

$R_2$ kann in irgend einer Stellung des Naphthalinrings sein, z.B. in 4-, 5-, 6-, 7- oder 8-Stellung. Es befindet sich aber vorzugsweise in 6- oder 7-Stellung.

Besonders interessant sind die Verbindungen der Formel I, worin $R_1$ in 4-Stellung ist und eine der oben angegebenen Bedeutungen hat und $R_2$ Wasserstoff ist.

Bevorzugt sind Verbindungen der Formel I, worin $R_1$ in 4-Stellung ist und Chlor oder Nitro bedeutet und $R_2$ Wasserstoff ist, und insbesondere jene, worin $R_1$ 4-Chlor und $R_2$ Wasserstoff sind (Mangansalz von C. I. Pigment Rot 55).

Mit diesen Verbindungen erhält man sehr interessante Rot- bis Brauntöne.

Verbindungen der Formel I, worin $R_1$ in 4-Stellung ist und Halogen oder Nitro bedeutet und $R_2$ Wasserstoff ist, sowie ihre Herstellung sind z.B. in US-Patent 2 649 383 beschrieben. Das Mangansalz von C. I. Pigment Rot 55 kann als farbstarkes und hochtransparentes Braunpigment hergestellt werden, und ist somit ein ausgezeichneter Kandidat für Metallglanz-Applikationen. Wegen seiner geringen Beständigkeit in Kombination mit Aluminiumplättchen, hat sich das Pigment jedoch nicht behaupten können.

Neue, noch nicht offenbarte Verbindungen der Formel I können ausgehend von entsprechenden bekannten Ausgangsprodukten nach an sich bekannten Methoden, etwa wie in US-Patent 2 649 383 beschrieben, hergestellt werden.

Die erfindungsgemässe perlglänzende Ueberzugszusammensetzung kann zusätzlich zum Mangansalz des Azopigments auch andere dafür übliche Pigmente enthalten, wie z.B. Eisenoxide, Titandioxid oder organische Pigmente mit guten Beständigkeiten.

Bei den erfindungsgemäss einzusetzenden beschichteten Glimmerpartikeln handelt es sich um mit Metalloxiden, z.B. Titandioxid, Eisenoxiden oder Mischungen davon, gegebenenfalls mit anderen hitzebeständigen Metalloxiden wie z.B. den Oxiden des Kupfers, Calciums, Cadmiums, Kobalts, Bariums, Strontiums, Mangans, Magnesiums, Zinns und Lithiums, beschichteten Glimmerpartikeln. Die Metalloxidbeschichtung weist eine Schichtdicke im molekularen Bereich auf und macht etwa 10 bis 60 % des Gesamtgewichtes der beschichteten Glimmerpartikeln aus. Bevorzugt werden Glimmerpartikeln die mit Eisenoxid beschichtet sind, insbesondere mit Eisenoxid und Titanoxid, gegebenenfalls zusammen mit einer kleinen Menge anderer Oxide, z.B. Chromoxid, und im Farbenbereich Silber, Bronze, Kupfer bis Rot liegen. Die beschichteten Glimmerpartikeln und deren Herstellung sind bekannt und z.B. in den US-Patenten Nr. 3 087 828 und Nr. 3 874 890 beschrieben.

Die beschichteten Glimmerpartikeln sind bevorzugt von weitgehend einheitlicher Grösse, zwischen 5 und 50 µm Länge und Breite und zwischen 0,25 und 1,0 µm Dicke, d.h. plättchenförmig. Bevorzugte Glimmerpartikeln der angegebenen Grösse, die mit Eisenoxid und einer kleineren Menge Titandioxid und

Chromoxid beschichtet sind, sind im Handel erhältlich (z.B. bei Mearle Corp.).

Als Bindemittelsystem kann erfindungsgemäss jegliches filmbildendes Harz, das üblicherweise in Zweischichtlacksystemen eingesetzt wird Verwendung finden, wie z.B. Acryl-, Alkyd-, Polyurethan-, Polyester- und Aminoplastharze, die in geeigneten Lösungsmitteln gelöst oder dispergiert sind. Bei den Lösungsmitteln kann es sich um wässrige oder organische Lösungsmittel handeln. Geeignete organische Lösungsmittel sind z.B. aliphatische, cycloaliphatische oder aromatische Kohlenwasserstoffe, Ester, Ether, Ketone oder Alkohole oder Mischungen derselben, gegebenenfalls zusammen mit einem mit dem Harz verträglichen nicht flüchtigen Celluloseester oder Wachs, wie beispielsweise Nitrocellulose, Cellulosepropionat, Celluloseacetat oder ähnliche, oder Gemische davon.

Bevorzugte Harze im Bindemittelsystem sind die Acrylharze, z.B. Homopolymere von Methylmethacrylat oder Copolymere von Methylmethacrylat mit Acrylsäure, Methacrylsäure, $C_1$-$C_4$-Alkyl-Acrylaten, $C_2$-$C_4$-Alkyl-Methacrylaten, Vinylacetat, Acrylnitril, Styrol, usw. und Gemische davon.

Die erfindungsgemässen Ueberzugszusammensetzungen enthaltend die beschriebenen Bindemittel, Glimmerpartikeln und Mangansalze von Azopigmenten weisen im allgemeinen einen Feststoffgehalt von 10 bis 80 Gew.%, bevorzugt 30 bis 60 Gew.% und insbesondere 45 bis 55 Gew.% auf. Der restliche Anteil besteht aus Lösungsmittel(n).

Die erfindungsgemässen Ueberzugszusammensetzungen enthalten vorzugsweise 0,2 bis 10 Gew.% und insbesondere 0,5 bis 5 Gew.% beschichtete Glimmerpartikeln, sowie 1 bis 10 Gew.% und insbesondere 2 bis 7 Gew.% einer Verbindung der Formel I. Solche Zusammensetzungen weisen einen Feststoffgehalt von 30 bis 60 Gew. % auf. Das bevorzugte Gewichtsverhältnis von Glimmerpartikeln zu Verbindung der Formel I variiert zwischen 1:9 und 7:3 und ist z.B. von 3:7.

Besonders bevorzugt sind Ueberzugszusammensetzungen enthaltend ein Acrylharz-Bindemittel, 1 bis 5 Gew. % mit Eisenoxid beschichtete Glimmerpartikeln und 2 bis 7 Gew. % einer Verbindung der Formel I, worin $R_1$ 4-Chlor oder 4-Nitro und $R_2$Wasserstoff bedeuten. Ihr Feststoffgehalt variiert bevorzugt zwischen 45 und 55 Gew.%.

Ein weiterer Gegenstand der Erfindung betrifft ein mit mindestens einer Schicht der obenbeschriebenen perlglänzenden Ueberzugszusammensetzung und mindestens einer Schicht einer klaren Decklackzusammensetzung überzogenes Substratmaterial.

Als Substratmaterial kommen erfindungsgemäss ein metallisches Material, wie z.B. Stahl, Aluminium, Kupfer, Magnesium oder Legierungen davon, sowie Glas, Keramik oder organische Polymere in Frage. Bevorzugt wird das für die Automobilindustrie übliche metallische und hartpolymere Material. Das Substratmaterial kann nach üblichen Methoden vorbehandelt werden, z.B. mit Korrosionsschutzmitteln, Oberflächenmodifiziermitteln und Grundanstrichmitteln.

Das Substratmaterial wird mit mindestens einer und bevorzugt zwei bis vier Schichten der perlglänzenden Ueberzugszusammensetzung überzogen. Die Gesamtdicke der Schichten kann variieren, beispielsweise zwischen 5 und 60 $\mu$m und bevorzugt zwischen 10 und 25 $\mu$m.

Die erfindungsgemäss einzusetzenden klaren Decklackzusammensetzungen sind jene, die in Zweischichtlacksystemen üblich Verwendung finden. Solche klare Decklackzusammensetzungen bilden, wenn sie schichtweise aufgetragen werden, einen durchsichtigen Film, der es gewährleistet, dass die wirkungsvollen Effekte der erfindungsgemässen als Vorlegelack eingesetzten perlglänzenden Ueberzugszusammensetzung deutlich sichtbar sind.

Die klaren Decklackzusammensetzungen können die gleichen oder ähnliche Bindemittelsysteme enthalten wie die perlglänzenden Vorlegelacke, wie z.B. Acryl-, Alkyd-, Polyurethan-, Polyester- oder Aminoplastharze in gelöster oder dispergierter Form. Acrylharze sind bevorzugt. Die klaren Decklackzusammensetzungen können zusätzlich Stabilisatoren enthalten, welche den darunterliegenden Vorlegelack und das Substratmaterial vor der schädlichen Wirkung des Lichtes, der Feuchtigkeit und des Sauerstoffs schützen soll. Geeignete Stabilisatoren sind z.B. die herkömmlichen Korrosionsschutzmittel, Lichtschutzmittel, Antioxidantien, usw.. Bevorzugte Stabilisatoren sind Lichtschutzmittel, wie z.B. die gehinderten Aminlichtschutzmittel, wie sie z.B. in US-Patent 4 314 933 beschrieben sind, und die UV-Absorber. Bevorzugte UV-Absorber sind Benztriazole, insbesondere 2-(2-Hydroxyphenyl)-benztriazole, wie z.B. die 5-Methyl-3′,5′-di-tert-butyl-, 5′-tert,-Butyl-, 5′-(1,1,1,3,3-Tetramethylbutyl)-, 5-Chlor-3′,5′-di-tert.-butyl-, 5-Chlor-3′-tert.-butyl-5′-methyl-, 3′-sec.-Butyl-5′-tert.-butyl-, 3′,5′-Di-tert.-amyl-Derivate des 2-(2-Hydroxyphenyl)-benztriazols. Von Vorteil ist die Kombination eines der bevorzugten gehinderten Aminlichtschutzmittel mit einem der bevorzugten UV-absorbierenden Benztriazolen.

Das mit wenigstens einer Schicht der perlglänzenden Ueberzugszusammensetzung überzogene Substratmaterial wird mit mindestens einer, bevorzugt zwei bis vier Schichten der klaren Decklackzusammensetzung überzogen. Bevorzugt werden eine oder zwei Schichten einer klaren Acryl-Decklackzusammensetzung, insbesondere einer klaren Acryl-Decklackzusammensetzung, die ein gehindertes Aminlichtschutzmittel enthält. Die Gesamtdicke der Decklackschichten kann zwischen 10 und 100 µm variieren, beträgt aber vorzugsweise das 2- bis 3-fache der Dicke der Vorlegelackschichten, z.B. zwischen 25 und 75 µm.

Ein weiterer Gegenstand der Erfindung betrifft ein Verfahren zum Beschichten eines Substratmaterials durch Auftragen mindestens einer Schicht der obenbeschriebenen perlglänzenden Ueberzugszusammensetzung und mindestens einer Schicht einer klaren Decklackzusammensetzung.

Die Schichten können auf das Substratmaterial nach einer der herkömmlichen Methoden, z.B. durch Streichen, Spritzen, Tauchen oder Flutlackieren, aufgetragen werden, vorzugsweise jedoch durch Spritzen, z.B. Druckluftspritzen, elektrostatisches Spritzen, Heissspritzen, Airless-Spritzen oder ähnliche Verfahren. Die Dicke der aufgetragenen Schicht wird durch geeignete Auswahl der Beschichtungsmethode und der Viskosität der aufgetragenen Ueberzugszusammensetzung bestimmt. Die Viskosität wird durch Zusatz einer grösseren Menge Lösungsmittel oder Feststoff eingestellt.

Das beschichtete Substratmaterial kann nach dem Auftragen der einzelnen Schichten kurzen Trocknungs- oder Härtungsperioden ausgesetzt werden. Dies kann durch ein sogenanntes "Flash" (Lösungsmittelverdunstung) bei Raumtemperatur während 30 Sekunden bis 10 Minuten geschehen. Bevorzugt wird ein "Flash" zwischen 30 Sekunden und 3 Minuten zwischen Schichten gleicher Zusammensetzung und zwischen 2 und 10 Minuten zwischen der Einzelschicht oder letzten Schicht des Vorlegelacks und der Einzelschicht oder ersten Schicht des Decklacks. Längeres Trocknen bei Raum- oder höherer Temperatur kann in Betracht gezogen werden, aber ein beschränkt dauerndes Trocknen in den obenerwähnten Zeitspannen ist vorzuziehen, weil es eine bessere Haftung der aufgetragenen Schichten ohne ansehnliche Vermischung, insbesondere zwischen Vorlegelack und Decklack, gewährleistet.

Eine bevorzugte Ausführungsform der Erfindung betrifft ein Verfahren zum Beschichten eines Substratmaterials wie oben beschrieben durch

-Aufspritzen zweier Schichten einer perlglänzenden Ueberzugszusammensetzung enthaltend eine Verbindung der Formel I, worin $R_1$ 4-Chlor und $R_2$ Wasserstoff bedeuten, auf ein unbeschichtetes oder vorbeschichtetes Substratmaterial mit zwischengeschalteter "Flash"-Trocknung von 30 Sekunden bis 3 Minuten bei Raumtemperatur bis zu einer Gesamtschichtdicke zwischen 10 und 25 µm,

-Trocknen zwischen 2 und 10 Minuten bei Raumtemperatur und

-Aufspritzen zweier Schichten einer klaren Decklackzusammensetzung mit zwischengeschalteter "Flash"-Trocknung von 30 Sekunden bis 3 Minuten bei Raumtemperatur bis zu einer Gesamtschichtdicke des Decklacks zwischen 25 und 75 µm.

Es ist gefunden worden, dass die erfindungsgemässe perlglänzende Ueberzugszusammensetzung Zweischichtlackierungen hoher Farbstärke mit ausgezeichnetem Perlglanz liefern. Ueberraschenderweise zeigen solche Lackierungen, beispielsweise bei Bewitterung in einem "Weather-O-meter" oder im Freien, eine ausgezeichnete Beständigkeit. Ein Substratmaterial, das mit einer perlglänzenden Ueberzugszusammensetzung enthaltend das bevorzugte Pigment, d.h. die Verbindung der Formel I, worin $R_1$ 4-Chlor und $R_2$ Wasserstoff bedeuten, zeichnet sich durch eine erheblich bessere Beständigkeit aus, im Vergleich zu einem Substratmaterial, welches identisch überzogen ist, mit der einzigen Ausnahme, dass entweder das erwähnte Pigment durch ein anderes für solche Applikationen übliche Pigment (z.B. C.I. Pigment Rot 224) oder der Glimmer durch Aluminium oder durch Titandioxid ersetzt werden. Aehnlich gute Beständigkeiten werden mit anderen erfindungsgemäss einzusetzenden Mangansalzen von Azopigmenten erhalten.

Die folgenden Beispiele erläutern die Erfindung.

Beispiel 1a) 35 g 4-Chlor-anthranilsäure (98%ig) werden bei ca. 40 °C in eine Lösung von 8,8 g NaOH in 400 g Wasser gelöst. Die Lösung wird durch Eiszugabe auf 4 °C abgekühlt, dann werden langsam 13,87 g in 50 g Wasser gelöstes Natriumnitrit zugegeben. Nach 10 Minuten Rühren wird die Lösung innerhalb von 15 Minuten einem Gemisch von 200 g Wasser und 99 g konzentrierter Salzsäure bei 8 °C zugetropft und danach 30 Minuten bei 9-11 °C gehalten. Dann werden 2 g Aktivkohle zugegeben und die Mischung wird mittels Filtration durch Celite® (Manville Prod. Corp.) geklärt.

b) 38,4 g 2-Hydroxy-3-naphthoesäure (98%ig) werden in eine Lösung von 35 g NaOH in 400 g Wasser gelöst, dann werden 31,8 g Natriumcarbonat zugegeben und nach erfolgter Lösung wird die Temperatur durch Eiszugabe auf 8 °C eingestellt. Danach wird innert 50 Minuten die unter a) vorbereitete Diazolösung zugegeben, wobei die Temperatur zwischen 7 und 9 °C gehalten wird. Die erhaltene Aufschlämmung wird 15 Minuten gerührt und der pH mit konzentrierter Salzsäure auf 9,4 eingestellt. Nach weiteren 15 Minuten bei 10-12 °C wird die Aufschlämmung innert 30 Minuten auf 45 °C erwärmt, 5 Minuten bei dieser Temperatur gehalten, filtriert und mit einer 5%igen wässrigen Natriumchloridlösung gewaschen.

Der erhaltene Presskuchen wird erneut in 2500 g Wasser aufgeschlämmt und mit 4,8 g Seife (Trisulphoil-Soap D®, Scholler, Philadelphia) in 40 g Wasser und 7,8 g Natriumacetat in 40 g Wasser behandelt. Dann wird der pH der Suspension mit 5%iger wässriger Natronlauge auf 8,8 eingestellt. Der Aufschlämmung wird bei 27 °C innert 7 Minuten eine Lösung von 67,5 g Mangansulfat-Monohydrat in 320 g

Wasser zugegeben. Nach Einstellung des pH auf 8,2 mit 5%iger wässriger Natronlauge wird die Aufschlämmung innert 65 Minuten auf 95 °C erhitzt. Dann wird durch Zugabe von Eis und Wasser auf 65 °C abgekühlt, das Pigment wird abfiltriert, mit warmem Wasser gewaschen und bei 65 °C getrocknet. Man erhält 87,7 g des Mangansalzes der Formel

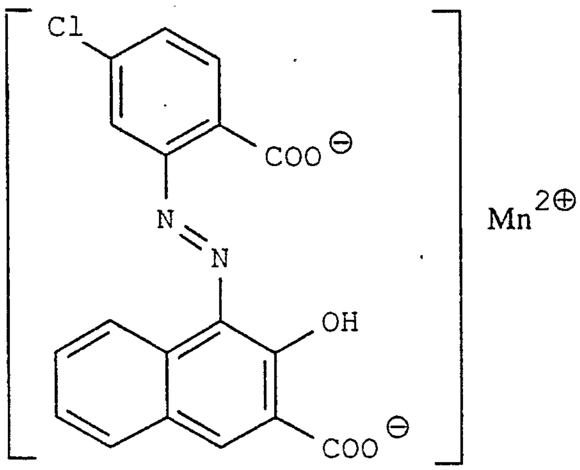

Verwendet man 4-Nitroanthranilsäure anstelle von 4-Chloranthranilsäure, so erhält man die Verbindung der Formel I, worin $R_1$ 4-Nitro und $R_2$ Wasserstoff bedeuten. Weitere Pigmente der Formel I mit anderen Substituenten können in analoger Weise hergestellt werden.

Beispiel 2: Durch Vermahlen eines Gemisches von 39,6 g des gemäss Beispiel 1 erhaltenen Pigments, 116,5 g eines Acryl-Dispersionsharzes und 173,9 g eines geeigneten Lösungsmittels in einer Laborkugelmühle während 64 Stunden wird die Pigment-Lackanreibung hergestellt. Die Glimmer-Lackanreibung wird durch Vermischen (von Hand) von 72 g beschichteter Glimmerplättchen (Exterior Brite Bronze No. 249X®, 31-37 % $Fe_2O_3$, 2-4 %$TiO_2$, 0,3-0,9 % $Cr(OH)_3$ der Fa. Mearle Corp.) mit 211,8 g eines AcrylDispersionsharzes und 116,2 g Lösungsmittel hergestellt. Die Pigment-Lackanreibung (53,6 g) wird mit 15,3 g Glimmer-Lackanreibung und weiterer 81,1 g Harzlösung (52,8 Gew. % Feststoffgehalt) vermischt bis zu einer Spritzviskosität von 21-23 Sekunden in einem "Fisher Cup No. 2". Man erhält so den Vorlegelack mit einer Pigment/Glimmer-Zusammensetzung im Gewichtsverhältnis 70:30.

Auf mit einem grauen Acryl-Grundierlack grundierte Aluminium-Bleche werden zwei Schichten Vorlegelack bis zu einer Gesamtschichtdicke von 15-20 µm gespritzt, wobei zwischen dem Aufspritzen der ersten und der zweiten Schicht eine "Flash"-Trocknung von 90 Sekunden eingeschaltet wird. Nach dreiminütiger "Flash"-Trocknung wird der klare Acryldecklack durch Aufspritzen zweier Schichten von insgesamt 37-50 µm Schichtdicke (90 Sekunden "Flash"-Trocknung nach dem Aufspritzen der ersten Schicht) aufgetragen. Die lackierten Aluminiumbleche werden dann 10 Minuten bei Raumtemperatur getrocknet und dann 30 Minuten bei 120 °C gebrannt.

Man erhält eine hervorragende Lackierung, die sich durch hohe Farbstärke, ausserordentlichen Perlglanz, hohen Glanz und "DOI" (Distinctness of Image) auszeichnet.

Beispiel 3: Ein Aluminium-Blech wird wie in Beispiel 2 lackiert, mit der einzigen Ausnahme, dass der Vorlegelack ein Pigment der Formel I enthält, worin $R_1$ 4-Nitro anstelle von 4-Chlor ist. Man erhält eine ebenso gute Lackierung, wie in Beispiel 2.

Beispiel 4: Ein Aluminium-Blech wird wie in Beispiel 2 lackiert, mit der einzigen Ausnahme, dass der Vorlegelack Glimmerplättchen Exterior Russet No. 449X® (Fa. Mearle Corp.) mit 46-52 % $Fe_2O_3$, 2-4 % $TiO_2$ und 0,3-0,9 % $Cr(OH)_3$ anstelle von Exterior Brite Bronze No. 249X® enthält. Man erhält eine ebenso gute Lackierung wie in Beispiel 2.

## Ansprüche

1. Perlglänzende Ueberzugszusammensetzungen enthaltend ein Harz-Bindemittelsystem, beschichtete Glimmerpartikeln und ein Mangansalz eines Azopigmentes.

2. Ueberzugszusammensetzungen gemäss Anspruch 1, dadurch gekennzeichnet, dass das Mangansalz eines Azopigments eine Verbindung der Formel

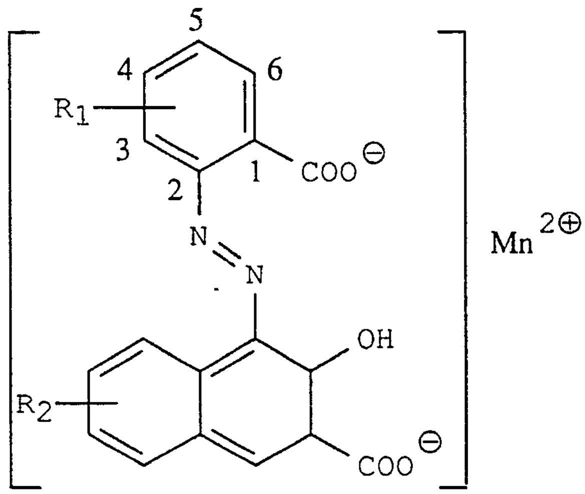

(I)

ist, worin $R_1$ und $R_2$, unabhängig voneinander, Wasserstoff, $C_1$-$C_4$-Alkyl, $C_1$-$C_4$Alkoxy, Halogen, Nitro, Cyano, $C_1$-$C_4$-Alkoxycarbonyl, Carbamoyl oder Sulfamoyl bedeuten.

3. Ueberzugszusammensetzungen gemäss Anspruch 2, dadurch gekennzeichnet, dass in der Verbindung der Formel I $R_1$ in 4-Stellung ist und $R_2$ Wasserstoff bedeutet.

4. Ueberzugszusammensetzungen gemäss Anspruch 3, dadurch gekennzeichnet, dass $R_1$ Chlor bedeutet.

5. Ueberzugszusammensetzungen gemäss Anspruch 3, dadurch gekennzeichnet, dass $R_1$ Nitro bedeutet.

6. Ueberzugszusammensetzungen gemäss Anspruch 1, dadurch gekennzeichnet, dass die Glimmerpartikeln mit Eisenoxid beschichtet sind.

7. Ueberzugszusammensetzungen gemäss Anspruch 1, dadurch gekennzeichnet, dass das Harz-Bindemittelsystem ein Acrylharz enthält.

8. Ueberzugszusammensetzungen gemäss Anspruch 1 gekennzeichnet durch einen Feststoffgehalt von 30-60 Gew.%.

9. Ueberzugszusammensetzungen gemäss Anspruch 2, dadurch gekennzeichnet dass sie 0,2 bis 10 Gew.% beschichtete Glimmerpartikeln und 1 bis 10 Gew.% einer Verbindung der Formel I enthalten.

10. Ueberzugszusammensetzungen gemäss Anspruch 9, dadurch gekennzeichnet, dass das Gewichtsverhältnis von Glimmerpartikeln zu Verbindung der Formel 1 zwischen 1:9 und 7:3 ist.

11. Verfahren zum Beschichten eines Substratmaterials durch
- Auftragen mindestens einer Schicht der perlglänzenden Ueberzugszusammensetzung gemäss Anspruch 1 und mindestens einer Schicht einer klaren Decklackzusammensetzung.

12.Verfahren gemäss Anspruch 11, gekennzeichnet durch
- Aufspritzen zweier Schichten einer perlglänzenden Ueberzugszusammensetzung enthaltend eine Verbindung der Fromel I, worin $R_1$ 4-Chlor und $R_2$ Wasserstoff bedeuten, auf ein unbeschichtetes oder vorbeschichtetes Substratmaterial mit zwischengeschalteter "Flash"-Trocknung von 30 Sekunden bis 3 Minuten bei Raumtemperatur bis zu einer Gesamtschichtdicke zwischen 10 und 25 µm,
- Trocknen zwischen 2 und 10 Minuten bei Raumtemperatur und
- Aufspritzen zweier Schichten einer klaren Decklackzusammensetzung mit zwischengeschalteter "Flash"-Trocknung von 30 Sekunden bis 3 Minuten bei Raumtemperatur bis zu einer Gesamtschichtdicke des Decklacks zwischen 25 und 75 µm.